# EUROPEAN PATENT APPLICATION

(11) **EP 4 626 075 A1**
(43) Date of publication of application: **01.10.2025**
(21) Application number: 23894764.2
(22) Date of filing: 13.09.2023
(51) Int. Cl.: H04W 36/00, H04W 36/32, H04W 36/30, H04W 36/08, H04W 36/36, H04W 84/06, H04W 36/18

(54) **DEVICE AND METHOD FOR PERFORMING HANDOVER IN COMMUNICATION SYSTEM**

(30) Priority: 25.11.2022 KR 20220160441; 29.06.2023 KR 20230084033
(71) Applicant: AJOU UNIVERSITY INDUSTRY-ACADEMIC COOPERATION FOUNDATION, Gyeonggi-do 16499 (KR)
(72) Inventor: KIM, Jae Hyun, Seoul 06602 (KR); YU, Ji Na, Yongin-si, Gyeonggi-do 16904 (KR); LEE, Won Jae, Suwon-si Gyeonggi-do 16497 (KR)
(74) Representative: Zacco Denmark A/S
(86) International application number: PCT/KR2023/013714
(87) International publication number: WO 2024/111833

(57) **Abstract**

The present disclosure relates to a handover in a communication system. A method for operating a terminal may include transmitting a measurement report to a first base station, receiving, from the first base station, a radio resource control (RRC) reconfiguration message including, as information on candidate base stations for a handover, at least one of information on a radio network temporary identifier (RNTI) of a second base station, information on a timing difference between the first base station and the second base station, and information on an uplink resource allocated by the second base station, and performing the handover to the second base station by using information included in the RRC reconfiguration message.

## Description

### BACKGROUND OF THE INVENTION

### Field of the Invention

The present disclosure relates to a communication system, and particularly, to an apparatus and method for performing handover in a communication system.

### Description of the Related Art

Mobile communication systems are evolving over generations. Following the long term evolution (LTE) system that has been successfully commercialized, the standardization and commercialization of the 5th generation (5G) system is underway, and the 6th generation (6G) system is currently under active discussion. Meanwhile, with the advancement of mobile communication systems, user requirements for the provision of various services, as well as service requirements from the industry, are continuously increasing, and accordingly, various measures to address these demands are required. Therefore, there is a need for efficient handover schemes to ensure the reliability of service data transmission and to satisfy service requirements.

### SUMMARY

The present disclosure is directed to providing an apparatus and method for performing a handover in a communication system.

The present disclosure is directed to providing an apparatus and method for performing a handover without a random access procedure in a communication system.

The present disclosure is directed to providing an apparatus and method for performing a conditional handover (CHO) in a communication system.

The present disclosure is directed to providing an apparatus and method for performing a handover between a terrestrial base station and a satellite base station in a communication system.

The present disclosure is directed to providing an apparatus and method for performing a handover based on the position and elevation angle of a satellite base station in a communication system.

According to an embodiment of the present disclosure, a method for operating a terminal in a communication system may include transmitting a measurement report to a first base station, receiving, from the first base station, a radio resource control (RRC) reconfiguration message including, as information on candidate base stations for a handover, at least one of information on a radio network temporary identifier (RNTI) of a second base station, information on a timing difference between the first base station and the second base station, and information on an uplink resource allocated by the second base station, and performing the handover to the second base station by using information included in the RRC reconfiguration message.

According to an embodiment of the present disclosure, the method may further include determining the second base station as a target base station based on an execution condition for the handover indicated by the RRC reconfiguration message.

According to an embodiment of the present disclosure, the execution condition may be defined based on at least one of a received signal strength for a base station, a distance between a terminal and the base station, and an elevation angle of the base station.

According to an embodiment of the present disclosure, the method may further include transmitting a handover indication message to the first base station and the second base station, receiving an uplink grant from the second base station, and transmitting a handover complete message to the second base station.

According to an embodiment of the present disclosure, the handover indication message may be broadcast to the first base station and the second base station.

According to an embodiment of the present disclosure, at least one of the candidate base stations may include a satellite base station.

According to an embodiment of the present disclosure, among the candidate base stations, a terrestrial base station may have a higher priority as a target base station compared to the satellite base station.

According to an embodiment of the present disclosure, the method may further include receiving, from the first base station, a measurement configuration message including at least one of altitude information and orbital information of the second base station, the second base station being the satellite base station.

According to an embodiment of the present disclosure, the measurement report may be transmitted when a condition related to an elevation angle of the first base station and an elevation angle of the second base station is satisfied.

According to an embodiment of the present disclosure, a method for operating a first base station in a communication system may include receiving a measurement report from a terminal, determining execution of a handover of the terminal, transmitting a handover request message to at least one or more neighbor base stations, receiving a handover request acknowledge message from the at least one or more neighbor base stations, and transmitting, to the terminal, a radio resource control (RRC) reconfiguration message including, as information on candidate base stations for the handover, at least one of information on a radio network temporary identifier (RNTI) of a second base station, information on a timing difference between the first base station and the second base station, and information on an uplink resource allocated by the second base station.

According to an embodiment of the present disclosure, the method may further include receiving a handover indication message from the terminal and receiving a handover complete message from the second base station among the at least one or more neighbor base stations.

According to an embodiment of the present disclosure, the handover request acknowledge message may include the information on the RNTI, the information on the timing difference, and the information on the uplink resource.

According to an embodiment of the present disclosure, at least one of the at least one or more neighbor base stations may include a satellite base station.

According to an embodiment of the present disclosure, the method may further include transmitting, to the terminal, a measurement configuration message including at least one of altitude information and orbital information of the second base station, the second base station being the satellite base station.

According to embodiments of the present disclosure, a handover to an optimal cell or base station can be performed for a terminal in a next generation mobile communication system in which various types of base stations coexist. This enables a handover to an optimal cell that efficiently supports multiple services configurable for a single terminal.

In addition, according to an embodiment of the present disclosure, in a next generation communication system including terrestrial base stations and satellite base stations, when a handover is performed between a terrestrial base station and at least one satellite base station or between a satellite base station and another satellite base station, information on a target base station can be perceived beforehand such that the handover can be performed more rapidly. In addition, according to an embodiment of the present disclosure, different service coverages can be supported according to characteristics of a target base station selected for each service. This enables a terminal to acquire timing information of a target base station before determining execution of a handover between multiple base stations and thus to effectively perform the handover without delay caused by a random access procedure. In addition, according to an embodiment of the present disclosure, a terminal can select an optimal base station at its location by considering information on neighbor satellite base stations.

### BRIEF DESCRIPTION OF THE DRAWINGS

FIG. 1 illustrates an example of a satellite network according to an embodiment of the present disclosure.
FIG. 2 illustrates another example of a satellite network according to an embodiment of the present disclosure.
FIG. 3 illustrates a configuration of a device in a communication system according to an embodiment of the present disclosure.
FIG. 4 illustrates a random access procedure in a communication system.
FIG. 5 illustrates an example of a conditional handover (CHO) procedure in a communication system.
FIG. 6 illustrates an example of a handover procedure in a communication system according to an embodiment of the present disclosure.
FIG. 7 illustrates another example of a handover procedure in a communication system according to an embodiment of the present disclosure.
FIG. 8 illustrates still another example of a handover procedure in a communication system according to an embodiment of the present disclosure.
FIG. 9 illustrates an operation of obtaining timing information for a target cell in a communication system according to an embodiment of the present disclosure.
FIG. 10 illustrates yet another example of a handover procedure in a communication system according to an embodiment of the present disclosure.
FIG. 11 illustrates an example of a situation in which a terrestrial base station and a satellite base station provide services in a communication system according to an embodiment of the present disclosure.
FIG. 12 illustrates an example of a handover procedure considering a satellite base station in a device applicable to the present disclosure.
FIG. 13 illustrates an example of a procedure in which a terminal performs measurement for base stations in a communication system according to an embodiment of the present disclosure.
FIG. 14 illustrates parameter values of a satellite measurable by a device according to an embodiment of the present disclosure.
FIG. 15 illustrates an example of a procedure for determining whether to perform a handover based on various parameters according to an embodiment of the present disclosure.
FIG. 16 illustrates an example of changes in the signal strength of a terrestrial base station and a satellite base station according to the location of a terminal.
FIG. 17 illustrates an example of a radio resource control reestablishment (RRE) procedure according to an embodiment of the present disclosure.
FIG. 18 illustrates an example of a modified RRE procedure according to an embodiment of the present disclosure.

### DETAILED DESCRIPTION

For terminology in the present embodiments, common terms, which are widely used now, have been selected in consideration of functions in the embodiments but are subject to alterations according to intentions of those skilled in the art, precedents, or the emergence of new technology. Furthermore, a particular case may have some terms that are randomly selected by an applicant, and those terms will be clarified in detail in corresponding parts. Accordingly, the terms used in the present embodiments should not be interpreted as merely the names of the terms, but should be defined based on the meanings they convey and the overall context of the present embodiments.

As the present disclosure may be subject to various modifications and have various forms, specific embodiments will be described in detail with reference to the accompanying drawings. However, the present embodiments are not limited to a specific disclosure form but are to be understood to include all the modifications, equivalents, and alternatives within the scope and idea thereof. The terms as used in the present specification are provided to merely describe the present embodiments, not intended to limit the embodiments.

Unless otherwise defined, all terms used herein have the same meaning as commonly understood by those skilled in the art to which the present embodiments pertains. The terms as generally defined in dictionaries may be interpreted as having the same or similar meanings as or to contextual meanings of related technology. Unless otherwise defined, the terms should not be interpreted as ideally or excessively formal meanings.

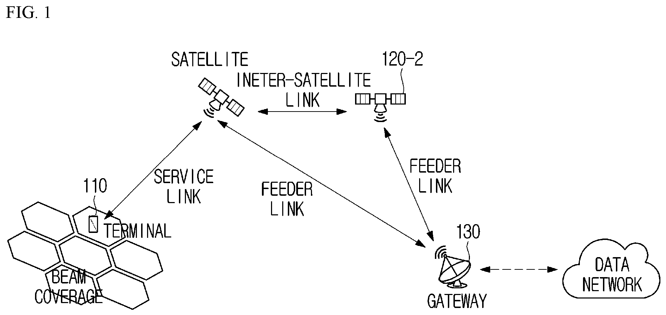

FIG. 1 illustrates an example of a satellite network according to an embodiment of the present disclosure.

Referring to FIG. 1, a satellite network includes a terminal 110, satellites 120-1 and 120-2, and a gateway 130. The terminal 110 is a user equipment and may be a mobile device or a fixed device. The satellites 120-1 and 120-2 fly along a predetermined orbit and provide a cell with a certain coverage area by forming a beam toward the ground. The gateway 130 provides the satellites 120-1 and 120-2 with a link for accessing the network.

A link between the terminal 110 and the satellite 120-1 is referred to as a service link and may be based on the NR specification. Links between the satellites 120-1 and 120-2 and the gateway 130 are referred to as feeder links and may be based on various radio interfaces. An inter-satellite link (ISL) may be used mainly for regenerative satellites.

In the case of a transparent satellite based on an NR-RAN architecture, NR-Uu may be a satellite radio interface for a feeder link and a service link. In the case of a transparent satellite, the satellite performs radio frequency filtering, frequency conversion, and amplification functions. In the case of a regenerative satellite, an on-board function is implemented in the satellite, thereby enabling the satellite to perform not only radio frequency filtering, frequency conversion, and amplification but also some or all base station functions such as switching, routing, coding, modulation, decoding, and demodulation.

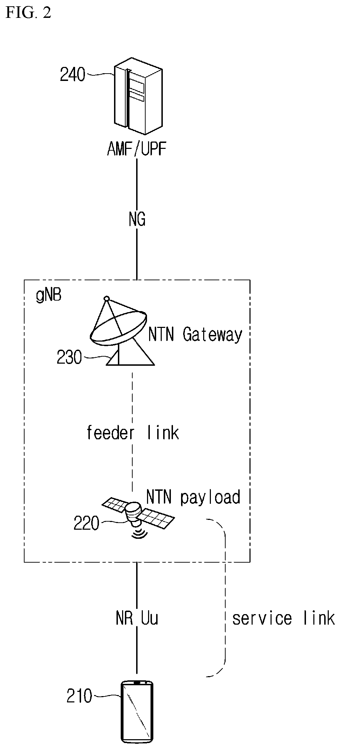

FIG. 2 illustrates another example of a satellite network according to an embodiment of the present disclosure. FIG. 2 illustrates an example of an NTN that provides non-terrestrial access to a UE 210 by using an NTN payload 220 and an NTN gateway 230. Referring to FIG. 2, a link between the NTN payload 220 and the UE 210 is a service link and may be based on a Uu interface. A link between the NTN payload 220 and the NTN gateway 230 is a feeder link. A link between the NTN gateway and an AMF/UPF 240 may be based on an NG interface. The NTN payload 220 may transparently forward a wireless protocol received from the UE 210 via a service link to the NTN gateway 230. Similarly, the NTN payload 220 may transparently forward a wireless protocol received from the NTN gateway 230 via a feeder link to the UE 210.

To this end, the NTN payload 220 may support the following connectivity. A base station may serve a plurality of NTN payloads. An NTN payload may be served by a plurality of base stations.

The NTN payload 220 may change a carrier frequency before retransmitting data on a service link. That is, the NTN payload 220 may use different carrier frequencies for a service link and a feed link. For NTN, at least one of an AMF name, an NR cell global identifier (NCGI), a base station C identifier (ID), a global base station ID, a tracking area identity, single network slice selection assistance information (S-NSSAI), a network slice AS group (NSAG), a network identifier (NID), a closed assess group (CAG) ID, and a local NG-RAN node identifier (ID) may be used as a network identifier, and in addition a mapped cell ID may further be used. Herein, a tracking area may correspond to a fixed geographical area.

Non-Geosynchronous Orbit (NGSO) includes low Earth orbit (LEO), which ranges from approximately 300 km to 1,500 km in altitude, as well as medium Earth orbit (MEO), which ranges from about 7,000 km to 25,000 km in altitude.

Service links may be classified into the following three types: earth-fixed type, quasi-earth-fixed type, and earth-moving type. The earth-fixed type provides a beam(s) continuously covering a same geographical area at every time. For example, a satellite in a geosynchronous orbit (GSO) may provide earth-fixed type service links. The quasi-earth-fixed type provides beams that continuously cover the same geographic area during a limited period, and during other periods, provides beams that cover different geographic areas. For example, a satellite in an NGSO may provide a quasi-earth-fixed type service link by using steerable beams. The earth-moving type provides beams whose coverage areas slide across the Earth's surface. For example, a satellite in an NGSO may provide an earth-moving type service link by using fixed or steerable beams.

By using a satellite in an NGSO, a base station may provide a quasi-earth-fixed cell coverage or an earth-moving cell coverage. By using a satellite in a GSO, a base station may provide an earth-fixed cell coverage. In the case of a NGSO, a switch of service links may refer to a switch of serving satellites.

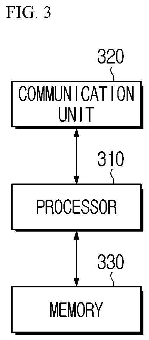

FIG. 3 illustrates a configuration of a device in a communication system according to an embodiment of the present disclosure. The device of FIG. 3 may be understood as a partial structure of any one of devices described with reference to FIG. 1, such as the terminal 110, the satellites 120-1 and 120-2, and the gateway 130.

Referring to FIG. 3, the device may include a processor 210, a communication unit 220, and a memory 330.

The processor 310 may control the overall functions and operations of the device. The processor 310 may include an application-specific integrated circuit (ASIC), another chipset, a logic circuit and/or a data processing device.

The communication unit 320 is connected to the processor 310 and transmits and receives wireless signals. The communication unit 320 may include a baseband circuit for processing wireless signals. For example, the communication unit 320 may include a short-range communication unit, a mobile communication unit, and a broadcast receiving unit. In an embodiment, the communication unit 320 may transmit and receive data with other devices, such as base stations, satellites, and so on.

The memory 330 is hardware that stores various types of data processed by the processor 310. For example, the memory 330 may store an SIR value for a target terminal of a transmitting terminal, as well as information regarding a group of target terminals for each transmitting terminal. In addition, the memory 330 may store applications, drivers, and so on, which are to be executed by the processor 310. The memory (330) may include random access memory (RAM) such as dynamic random access memory (DRAM) and static random access memory (SRAM), read-only memory (ROM), electrically erasable programmable read-only memory (EEPROM), CD-ROM, Blu-ray or other optical disk storage, hard disk drive (HDD), solid state drive (SSD), or flash memory.

The structure of FIG. 3 may be understood as at least a part of a terminal, a base station, a satellite, and a gateway. When the structure of FIG. 3 is a part of a satellite, the satellite may further include other hardware devices for orbital flight, apart from the components exemplified in FIG. 3. When the structure of FIG. 3 is a part of a gateway or a base station, the gateway or the base station may further include a component for supporting wired communication.

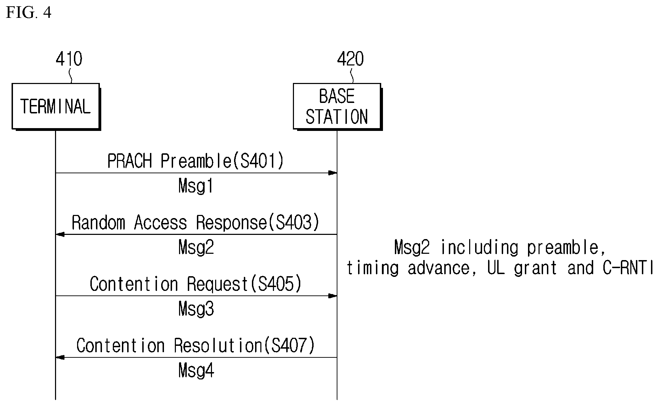

FIG. 4 illustrates a random access procedure in a communication system. FIG. 4 exemplifies a random access procedure consisting of four steps in a communication system.

Referring to FIG. 4, at step S401, a UE 410 that is not registered with a base station 420 transmits a random access preamble (RAP) to a base station 420 via a physical random access channel (PRACH). The UE 410 selects the random access preamble in a PRACH slot to initiate the random access procedure and transmits the preamble within the PRACH slot.

At step S403, the base station 420 that receives the random access preamble transmits a random access response. To this end, the base station 420 monitors a random access channel, receives the random access preamble, acknowledges a request of the UE 410, and then transmits the random access response. The random access response may include the random access preamble, a timing advance (TA), and a cell-radio network temporary identifier (C-RNTI). The UE 410 receives the random access response, decodes the random access response, and identifies a temporary identifier and initial wireless resource allocation information.

At step S405, the UE 410 transmits a contention request message, when contention occurs based on an allocated preamble ID. If the contention is not resolved, the UE 410 retransmits the random access preamble and tries the random access procedure again.

At step S407, the base station 420 allocates a wireless resource to the UE 410 and transmits a contention resolution message to the UE 410, thereby completing the random access procedure. Next, a logical connection for data transmission is established between the UE 410 and the base station 420.

A four-step random access procedure, such as that shown in FIG. 4, supports stable and rapid initial access between the UE 410 and the base station 420. Through a random access procedure such as that shown in FIG. 4, the following information is provided to the UE 410.

A TA value is initial uplink timing alignment. To solving the timing problem, timing is continuously measured by using an uplink signal. TAis used to adjust the arrival time of a subframe. C-RNTI is UE identification information. C-RNTI is defined in Table 1 below.

**[Table 1]**

| Value (hexa-decimal) | RNTI |
|---|---|
| 0000 | N/A |
| 0001-FFF2 | RA-RNTI, MSGB-RNTI, Temporary C-RNTI, C-RNTI, CI-RNTI, MCS-C-RNTI, CS-RNTI, TPC-PUCCH-RNTI, TPC-PUSCH-RNTI, TPC-SRS-RNTI, INT-RNTI, SFI-RNTI, SP-CSI-RNTI, PS-RNTI, SL-RNTI, SLCS-RNTI SL Semi-Persistent Scheduling V-RNTI, AI-RNTI, G-RNTI, and G-CS-RNTI |
| FFF3-FFFC | Reserved |
| FFFD | MCCH-RNTI |
| FFFE | P-RNTI |
| FFFF | SI-RNTI |

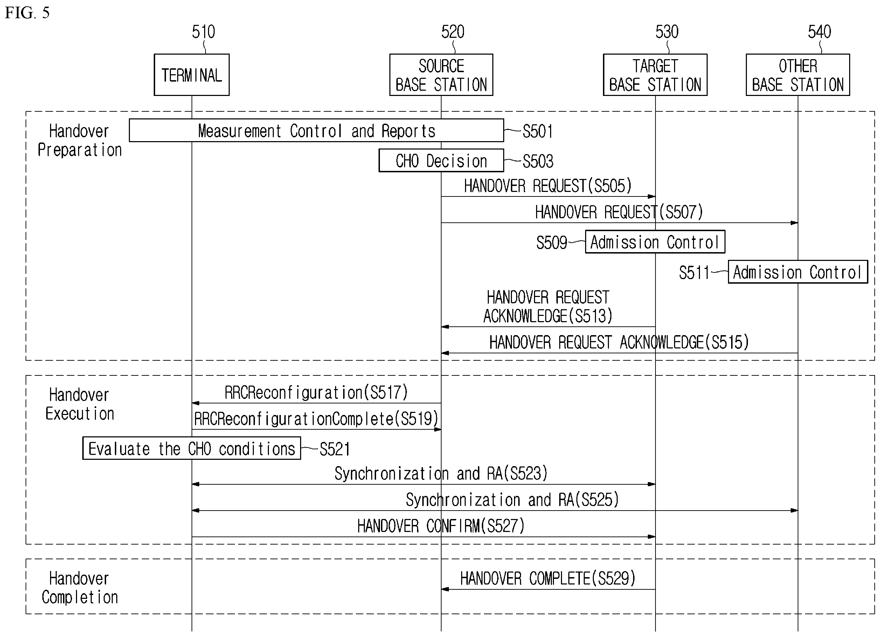

An uplink grant is an uplink resource allocation. It has a format that indicates the timing for data transmission. FIG. 5 illustrates an example of a conditional handover (CHO) procedure in a communication system. A conditional handover is a handover that is performed based on an execution condition for the handover, which is determined by a terminal. Herein, the execution condition is defined based on signal strengths of a serving cell and at least one neighbor cell and may be defined, for example, based on an absolute value of signal strength or a difference between signal strengths that exceeds or falls below a predefined or preset threshold.

Referring to FIG. 5, at step S501, a terminal 510 measures and reports signal strengths of a source base station 520, a target base station 530, and the other base station 540. When measurement values satisfy a given condition, a measurement event is detected, and the terminal 510 reports the measurement values to the source base station 520 accordingly. For example, the measurement event may be defined as the signal strength of a neighbor cell being greater than that of a serving cell. Herein, a signal strength may be determined by the sum of a measurement value and at least one offset. In addition, a hysteresis value may further be applied. At one offset may include at least one of an offset for a measurement object and an offset for a cell.

At step S503, the source base station 520 determines whether or not to execute the conditional handover. To determine whether the handover is needed, thresholds may be set for parameters such as reference signal received power (RSRP) and reference signal received quality (RSRQ). A threshold may be dynamically adjusted according to network quality, user demands, and mobility.

At step S505 and step S507, the source base station 520 transmits a handover request to the target base station 530 and the other base station 540. Herein, information on the terminal 510 may be transmitted together. The information on the terminal 510 may include at least one of a capability of the terminal 510, a measurement report of the terminal 510, and quality of service (QoS).

At step S509 and step S511, the target base station 530 and the other base station 540 perform admission control. In other words, based on the information on the terminal 510, the target base station 530 and the other base station 540 determine whether or not to admit the handover. Whether or not to admit the handover may be determined based on at least one of a frequency band, a transmission power, QoS, a network capacity, and load balance.

At step S513 and step S515, the target base station 530 and the other base station 540 transmit a handover request acknowledge message to the source base station 520. The handover request acknowledge message may include whether the handover is admitted, a C-RNTI, and transport layer information.

At step S517, the source base station 520 transmits a radio resource control (RRC) reconfiguration message to the terminal 510. That is, the source base station 520 indicates the handover to the terminal 510. The RRC reconfiguration message may include information on candidate cells for the conditional handover and information on an execution condition for the conditional handover. For example, for the execution condition, information on a measurement object and information on a threshold of measurement value may be included. In addition, according to various embodiments, the RRC reconfiguration message may include at least one of new cell information, a new C-RNTI to be used by the terminal 510 in the target base station 530, transport layer information that is configured for the terminal 510 in a base station, RRC context information, and security information.

At step S519, the terminal 510 transmits a RRC reconfiguration complete message to the source base station 520. The terminal 510 may notify that the terminal 510 successfully receives the RRC reconfiguration message and configures a connection with the target base station 530 based on information provided by the message.

At step S521, the terminal 510 evaluates a condition for the conditional handover. The terminal 510 determines whether the execution condition of the conditional handover identified through the RRC reconfiguration message is satisfied and identifies which cell satisfies the execution condition. For example, the condition of the conditional handover may be defined based on the strength of a received signal. For example, the execution condition may be defined as a signal strength for a neighbor cell being greater than a threshold, a sum of the signal strength for the neighbor cell and an offset being greater than a threshold, or the signal strength for the neighbor cell being greater than a signal strength for a serving cell.

At step S523 and step S525, based on the received RRC reconfiguration message, the terminal 510 performs synchronization and RA in cooperation with the target base station 530 and the other base station 540. A synchronization procedure is a procedure in which the terminal 510 aligns frame timing based on a primary synchronization signal (PSS) and a secondary synchronization signal (SSS) from the target base station 530. After synchronization is completed, the terminal 510 performs a RA procedure.

At step S527, the terminal 510 transmits a handover acknowledge message to the target base station 530. At step S529, the target base station 530 transmits a handover complete message to the source base station 520. When the handover is completed, the terminal 510 is disconnected from the source base station 520, and the source base station 520 releases resources allocated to the terminal 510.

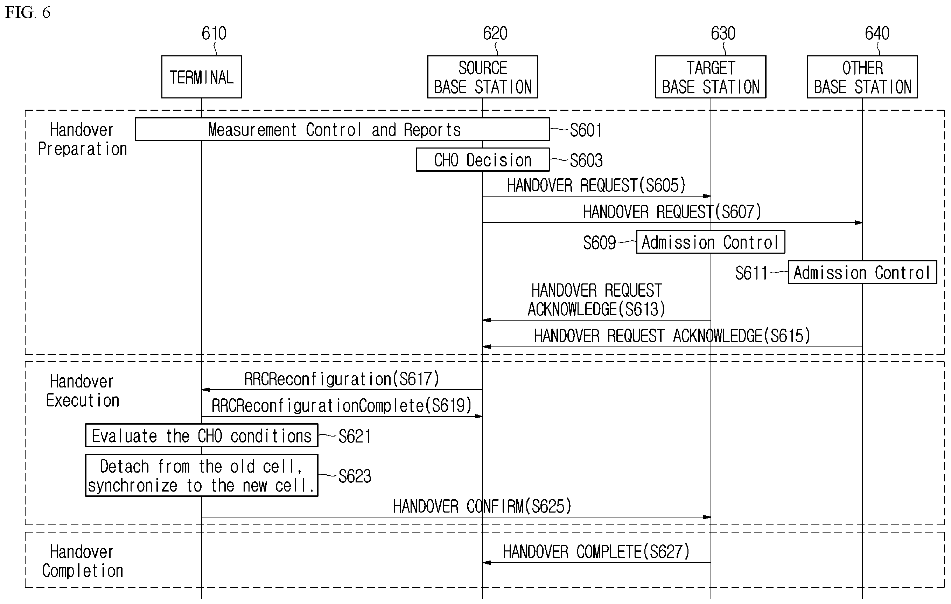

FIG. 6 illustrates an example of a handover procedure in a communication system according to an embodiment of the present disclosure.

Referring to FIG. 6, at step S601, a terminal 610 measures and reports signal strengths of a source base station 620, a target base station 630, and the other base station 640. When measurement values satisfy a given condition, a measurement event is detected, and the terminal 610 reports the measurement values to the source base station 620 accordingly. For example, the measurement event may be defined as the signal strength of a neighbor cell being greater than that of a serving cell. Herein, a signal strength may be determined by the sum of a measurement value and at least one offset. In addition, a hysteresis value may further be applied. At one offset may include at least one of an offset for a measurement object and an offset for a cell.

Herein, the offset for a measurement object (e.g., Ofn) is a measurement object specific offset for a reference signal of the neighbor cell, and the offset for a cell (e.g., Ocn) is a cell specific offset of the neighbor cell and may be set to zero if not configured for the neighbor cell. Herein, according to an embodiment of the present disclosure, a neighbor cell may include a satellite cell. Thus, an offset for a measurement object or an offset for a cell may be differently set or defined according to a terrestrial base station or a satellite base station.

In addition, at least one timer may be used for measurement reporting. For example, a time to trigger (TTT) may be used as a condition for a time length that satisfies an event condition. In addition, timer T321 or timer T322 is started upon receiving configuration information for measurement (e.g., meaConfig) and expires when a measurement result configured by the configuration information is obtained. When timer T321 or timer T322 expires, the terminal 610 may initiate a measurement reporting procedure and suspend relevant measurement. A value of at least one of the above-described TTT and timers may be provided to the terminal 610 through configuration information for measurement (e.g., ReportConfig). Herein, a TTT value and/or a timer value may be differently set or defined according to whether a measured neighbor cell is a terrestrial cell or a satellite cell.

At step S603, the source base station 620 determines whether or not to execute the conditional handover. That is, based on a measurement report, the source base station 620 determines that the terminal 610 perform a conditional handover.

At step S605 and step S607, the source base station 620 transmits a handover request to the target base station 630 and the other base station 640. Herein, information on the terminal 610 may be transmitted together. The information on the terminal 610 may include at least one of a capability of the terminal 610, a measurement report of the terminal 610, and QoS.

At step S609 and step S611, the target base station 630 and the other base station 640 perform admission control. Based on the received information on the terminal 610, the target base station 630 and the other base station 640 determine whether or not to admit the handover. Whether or not to admit the handover may be determined based on at least one of a frequency band, a transmission power, QoS, a network capacity, and load balance. In other words, based on an available resource and the number of terminals that are being connected, the target base station 630 and the other base station 640 determine whether the terminal 610 is admissible.

At step S613 and step S615, the target base station 630 and the other base station 640 transmit a handover request acknowledge signal to the source base station 620. The handover request acknowledge signal includes at least one of whether or not the handover is permitted, a C-RNTI, a timing difference, and an uplink grant. The timing difference indicates a difference of signal arrival time that is generated according to a distance between the terminal 610 and each of the base stations 630 and 640, and is used to set up an accurate synchronization condition between the terminal 610 and each of the base stations 630 and 640.

At step S617, the source base station 620 transmits a RRC reconfiguration message to the terminal 610. That is, the source base station 620 indicates the handover to the terminal 610. The RRC reconfiguration message may include information on candidate cells for the conditional handover and information on an execution condition for the conditional handover. For example, for the execution condition, information on a measurement object and information on a threshold of measurement value may be included. In addition, according to various embodiments, the RRC reconfiguration message may include at least one of new cell information, a new C-RNTI to be used by the terminal 610 in the target base station 630, a timing difference, and an uplink grant.

At step S619, the terminal 610 transmits a RRC reconfiguration complete message to the source base station 620. The terminal 610 notifies that the terminal 610 successfully receives the RRC reconfiguration message and configures a connection with the target base station 630 based on information provided by the message.

At step S621, the terminal 610 evaluates a condition for the conditional handover. The terminal 610 may monitor channels with a plurality of candidate base stations including the target base station 630 and determine, based on a measurement result, whether the execution condition of the conditional handover is satisfied. For example, the execution condition may be defined as a signal strength for a neighbor cell being greater than a threshold, a sum of the signal strength for the neighbor cell and an offset being greater than a threshold, or the signal strength for the neighbor cell being greater than a signal strength for a serving cell. That is, according to whether or not a measurement value exceeds a threshold, the terminal 610 may determine whether or not the execution condition is satisfied. Herein, in the present embodiment, whether or not the condition is satisfied for the target base station 630 is determined.

At step S623, the terminal 610 performs synchronization with the target base station 630 and is disconnected from the source base station 620.

At step S625, the terminal 610 that succeeds in the handover transmits a handover acknowledge message to the target base station 630. At step S627, the target base station 630 transmits a handover complete message to the source base station 620. When the handover is completed, the terminal 610 is disconnected from the source base station 620, and the source base station 620 releases resources allocated to the terminal 610.

According to the embodiment of FIG. 6, when performing synchronization, the terminal 610 may not use any separate RA procedure. Accordingly, a time required for a handover process may be reduced, allowing the duration of communication interruption during handover to be reduced.

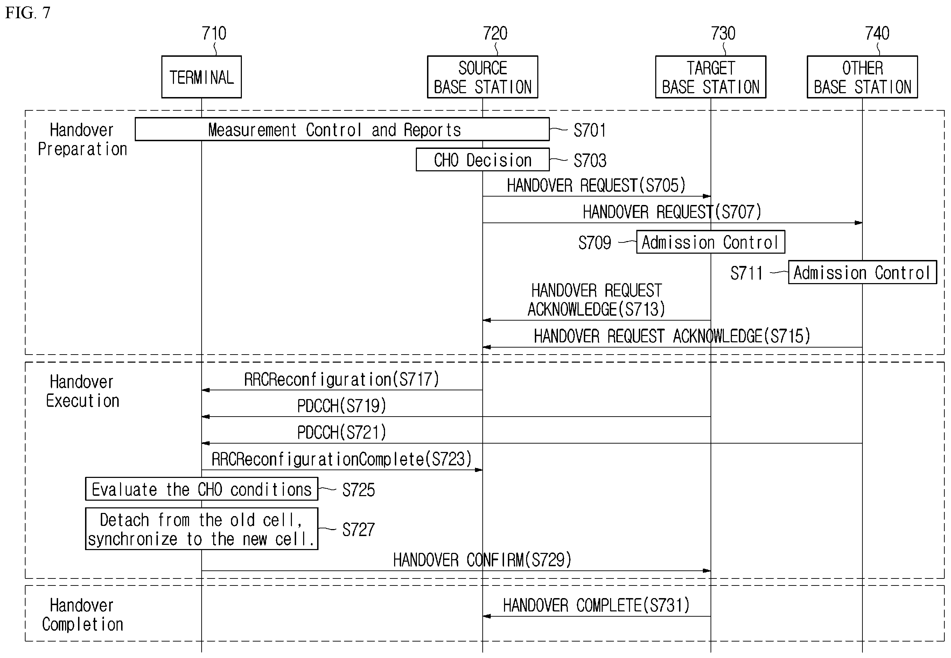

FIG. 7 illustrates another example of a handover procedure in a communication system according to an embodiment of the present disclosure.

Referring to FIG. 7, at step S701, a terminal 710 measures and reports signal strengths of a source base station 720, a target base station 730, and the other base station 740. When measurement values satisfy a given condition, a measurement event is detected, and the terminal 710 reports the measurement values to the source base station 720 accordingly. For example, the measurement event may be defined as the signal strength of a neighbor cell being greater than that of a serving cell. Herein, a signal strength may be determined by the sum of a measurement value and at least one offset. In addition, a hysteresis value may further be applied. At one offset may include at least one of an offset for a measurement object and an offset for a cell.

Herein, the offset for a measurement object (e.g., Ofn) is a measurement object specific offset for a reference signal of a neighbor cell, and the offset for a cell (e.g., Ocn) is a cell specific offset of a neighbor cell and may be set to zero if not configured for the neighbor cell. Herein, according to an embodiment of the present disclosure, a neighbor cell may include a satellite cell. Thus, an offset for a measurement object or an offset for a cell may be differently set or defined according to a terrestrial base station or a satellite base station.

In addition, at least one timer may be used for measurement reporting. For example, a time to trigger (TTT) may be used as a condition for a time length that satisfies an event condition. In addition, timer T321 or timer T322 is started upon receiving configuration information for measurement (e.g., meaConfig) and expires when a measurement result configured by the configuration information is obtained. When timer T321 or timer T322 expires, the terminal 610 may initiate a measurement reporting procedure and suspend relevant measurement. A value of at least one of the above-described TTT and timers may be provided to the terminal 810 through configuration information for measurement (e.g., ReportConfig). Herein, a TTT value and/or a timer value may be differently set or defined according to whether a measured neighbor cell is a terrestrial cell or a satellite cell.

At step S703, the source base station 720 determines whether or not to execute the conditional handover. In order to determine whether or not the handover is needed, thresholds may be set for parameters like RSRP and RSRQ. A threshold may be dynamically adjusted according to network quality, user demands, and mobility.

At step S705 and step S707, the source base station 720 transmits a handover request to the target base station 730 and the other base station 740. Herein, information on the terminal 710 may be transmitted together. The information on the terminal 710 may include at least one of a capability of the terminal 710, a measurement report of the terminal 710, and QoS.

At step S709 and step S711, the target base station 730 and the other base station 740 perform admission control. Based on the received information on the terminal 710, the target base station 730 and the other base station 740 determine whether or not to admit the handover. Whether or not to admit the handover may be determined based on at least one of a frequency band, a transmission power, QoS, a network capacity, and load balance.

At step S713 and step S715, the target base station 730 and the other base station 740 transmit a handover request acknowledge signal to the source base station 720. The handover request acknowledge message may include at least one of whether the handover is admitted, a C-RNTI, and a timing difference. The timing difference indicates a difference of signal arrival time that is generated according to a distance between the terminal 710 and each of the base stations 730 and 740, and is used to set up an accurate synchronization condition between the terminal 710 and each of the base stations 630 and 640.

At step S717, the source base station 720 transmits a RRC reconfiguration message to the terminal 710. That is, the source base station 720 indicates the handover to the terminal 710. The RRC reconfiguration message may include information on candidate cells for the conditional handover and information on an execution condition for the conditional handover. For example, for the execution condition, information on a measurement object and information on a threshold of measurement value may be included. In addition, according to various embodiments, the RRC reconfiguration message may include at least one of new cell information, a new C-RNTI to be used by the terminal 710 in the target base station 730, and a timing difference.

At step S719 and step S721, the target base station 730 and the other base station 740 transmit an uplink grant to the terminal 710 through a physical downlink control channel (PDCCH). The uplink grant includes information on a resource for data transmission. For example, PDCCH downlink control information (DCI) format 0_0 or format 0_1 may be used. That is, as the terminal 710 continuously monitors a downlink of the target base station 730 through make-before-break (MBB) described below, the target base station 730 and the other base station 740 may transmit an uplink grant directly to the terminal 710.

At step S723, the terminal 710 transmits a RRC reconfiguration complete message to the source base station 720. The terminal 710 may notify that the terminal 710 successfully receives the RRC reconfiguration message and configures a connection with the target base station 730 based on information provided by the message.

At step S725, the terminal 710 evaluates a condition for the conditional handover. The terminal 710 may monitor channels with a plurality of candidate base stations including the target base station 730 and determine, based on a measurement result, whether the execution condition of the conditional handover is satisfied. For example, the execution condition may be defined as a signal strength for a neighbor cell being greater than a threshold, a sum of the signal strength for the neighbor cell and an offset being greater than a threshold, or the signal strength for the neighbor cell being greater than a signal strength for a serving cell. That is, according to whether or not a measurement value exceeds a threshold, the terminal 710 may determine whether or not the execution condition is satisfied. Herein, in the present embodiment, whether or not the condition is satisfied for the target base station 730 is determined.

At step S727, the terminal 710 is synchronized with the target base station 730 and is disconnected from the source base station 720. At step S729, the terminal 710 transmits a handover acknowledge message to the target base station 730. At step S731, the target base station 730 transmits a handover complete message to the source base station 720. When the handover is completed, the terminal 710 disconnects from the source base station 720, and the source base station 720 releases resources allocated to the terminal 710.

According to the embodiment of FIG. 7, when performing synchronization, the terminal 710 may not use any separate RA procedure. Accordingly, a time required for a handover process may be reduced, allowing the duration of communication interruption during handover to be reduced. In addition, because the target base station 730 and the other base station 740 transmit the uplink grant directly to the terminal 710, there are advantages that the burden on the source base station 720 may be reduced and other information may be added to a RRC reconfiguration message.

MBB handover is a handover in which the terminal 710 receives both channels of the source base station 720 and the target base station 730 simultaneously until the completion of the handover and is disconnected from one of the channels after the completion of the handover. To utilize the procedure of FIG. 7, a condition of MBB handover may also be considered. When it is assumed that MBB handover is applied, the terminal 710 continuously monitors a downlink of the target base station 730, allowing the target base station 730 to allocate an uplink grant directly to the terminal 710.

In addition, timing difference information of the target base station 730 may be described as follows. A timing difference may be calculated based on donwlink (DL) propagation delays that are received from the source base station 720 and the target base station 730 respectively. Accordingly, the terminal 710 may calculate the timing difference based on a timing value of the target base station 730 received from the target base station 730 and a timing value of the source base station 720 received from the source base station 720.

According to the embodiment of FIG. 7, when performing synchronization, the terminal 710 may not use any separate RA procedure. Accordingly, a time required for a handover process may be reduced, allowing the duration of communication interruption during handover to be reduced. In addition, because the target base station 730 and the other base station 740 transmit the uplink grant directly to the terminal 710, there are advantages that the burden on the source base station 720 may be reduced and other information may be added to a RRC reconfiguration message.

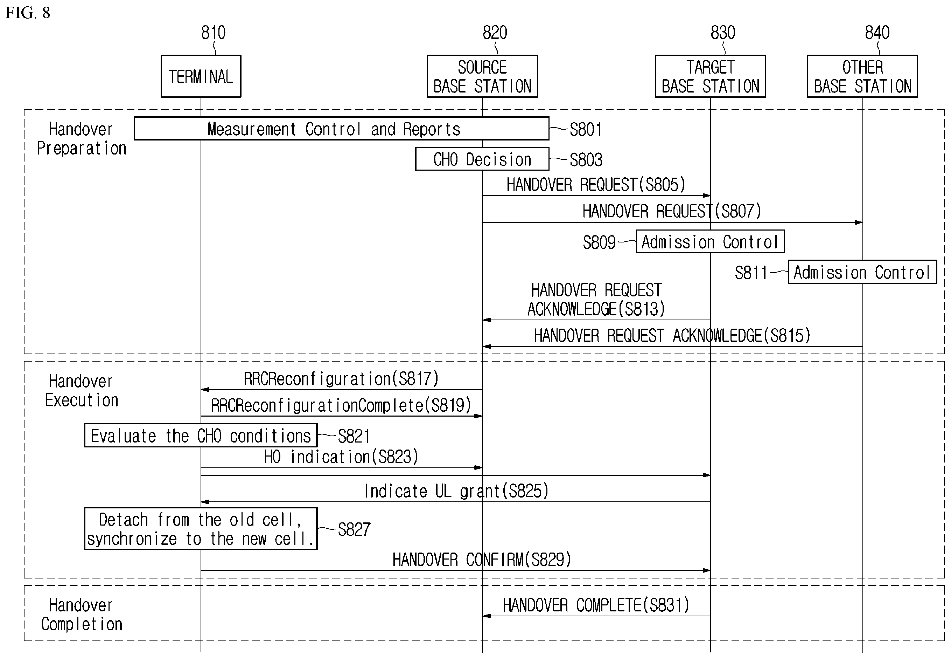

FIG. 8 illustrates another example of a handover procedure in a communication system according to an embodiment of the present disclosure.

Referring to FIG. 8, at step S801, a terminal 810 measures and reports signal strengths of a source base station 820, a target base station 830, and the other base station 840. When measurement values satisfy a given condition, a measurement event is detected, and the terminal 810 reports the measurement values to the source base station 820 accordingly. For example, the measurement event may be defined as the signal strength of a neighbor cell being greater than that of a serving cell. Herein, for the signal strengths, sums of measured signal strengths and at least one offset may be compared. In addition, a hysteresis value may further be applied. At one offset may include at least one of an offset for a measurement object and an offset for a cell.

Herein, the offset for a measurement object (e.g., Ofn) is a measurement object specific offset for a reference signal of a neighbor cell, and the offset for a cell (e.g., Ocn) is a cell specific offset of a neighbor cell and may be set to zero if not configured for the neighbor cell. Herein, according to an embodiment of the present disclosure, a neighbor cell may include a satellite cell. Thus, an offset for a measurement object or an offset for a cell may be differently set or defined according to a terrestrial base station or a satellite base station.

In addition, at least one timer may be used for measurement reporting. For example, a time to trigger (TTT) may be used as a condition for a time length that satisfies an event condition. In addition, timer T321 or timer T322 is started upon receiving configuration information for measurement (e.g., meaConfig) and expires when a measurement result configured by the configuration information is obtained. When timer T321 or timer T322 expires, the terminal 610 may initiate a measurement reporting procedure and suspend relevant measurement. A value of at least one of the above-described TTT and timers may be provided to the terminal 810 through configuration information for measurement (e.g., ReportConfig). Herein, a TTT value and/or a timer value may be differently set or defined according to whether a measured neighbor cell is a terrestrial cell or a satellite cell.

At step S803, the source base station 820 determines whether or not to execute the conditional handover. That is, based on a measurement report, the source base station 820 determines that the terminal 810 perform a conditional handover.

At step S805 and step S807, the source base station 820 transmits a handover request to the target base station 830 and the other base station 840. Herein, information on the terminal 810 may be transmitted together. The information on the terminal 810 may include at least one of a capability of the terminal 810, a measurement report of the terminal 810, and QoS.

At step S809 and step S811, the target base station 830 and the other base station 840 perform admission control. In other words, based on the received information on the terminal 810, the target base station 830 and the other base station 840 determine whether or not to admit the handover. Whether or not to admit the handover may be determined based on at least one of a frequency band, a transmission power, QoS, a network capacity, and load balance. In other words, based on an available resource and the number of terminals that are being connected, the target base station 830 and the other base station 840 determine whether the terminal 810 is admissible.

At step S813 and step S815, the target base station 830 and the other base station 840 transmit a handover request acknowledge signal to the source base station 820. The handover request acknowledge signal includes at least one of whether or not the handover is permitted, a C-RNTI, a timing difference, and uplink resource information. The timing difference indicates a difference of signal arrival time that is generated according to a distance between the terminal 810 and each of the base stations 830 and 840, and is used to set up an accurate synchronization condition between the terminal 810 and each of the base stations 630 and 640. The uplink resource information includes, at step S823 below, information on a resource that the terminal 810 may use to transmit a handover indication.

At step S817, the source base station 820 transmits a RRC reconfiguration message to the terminal 810. That is, the source base station 820 indicates the handover to the terminal 810. The RRC reconfiguration message may include information on candidate cells for the conditional handover and information on an execution condition for the conditional handover. For example, for the execution condition, information on a measurement object and information on a threshold of measurement value may be included. In addition, according to various embodiments, the RRC reconfiguration message may include at least one of new cell information, a new C-RNTI to be used by the terminal 810 in the target base station 830, a timing difference, and uplink resource information.

At step S819, the terminal 810 transmits a RRC reconfiguration complete message to the source base station 820. The terminal 810 notifies that the terminal 810 successfully receives the RRC reconfiguration message and configures a connection with the target base station 830 based on information provided by the message.

At step S821, the terminal 810 evaluates a condition for the conditional handover. The terminal 810 may monitor channels with a plurality of candidate base stations including the target base station 830 and determine, based on a measurement result, whether the execution condition of the conditional handover is satisfied. For example, the execution condition may be defined as a signal strength for a neighbor cell being greater than a threshold, a sum of the signal strength for the neighbor cell and an offset being greater than a threshold, or the signal strength for the neighbor cell being greater than a signal strength for a serving cell. That is, according to whether or not a measurement value exceeds a threshold, the terminal 810 may determine whether or not the execution condition is satisfied. Herein, in the present embodiment, whether or not the condition is satisfied for the target base station 830 is determined.

At step S823, the terminal 810 transmits a handover indication message to the target base station 820 and the target base station 830. The target base station 830 may not have to allocate any uplink grant to the terminal 810 until the condition for the conditional handover is satisfied. Accordingly, at step S821, when the condition for the conditional handover is satisfied, the terminal 810 transmits the handover indication message to the target base station 820 and the target base station 830.

According to various embodiments, the terminal 810 may transmit the handover indication message by using resources that are allocated by the source base station 820 and the target base station 830 respectively, and may also transmit the handover indication message simultaneously through broadcast. A resource for transmitting the handover indication message is determined based on the uplink resource information that is received at step S817. When the terminal 810 broadcasts the handover indication message, the target base station 830 may allocate a same resource to receive the broadcast message as a resource that the source base station 820 allocates to receive the broadcast message. To this end, the target base station 830 and the source base station 820 may share information on a resource beforehand to receive the broadcast message.

At step S825, the target base station 830 receiving the handover indication message transmits uplink grant information to the terminal 810. The terminal 810 may receive the uplink grant information from the target base station 830 by using a C-RNTI and a timing difference value that are included in the RRC reconfiguration message received at step S817.

At step S827, the terminal 810 is synchronized with the target base station 830 and is disconnected from the source base station 820. At step S829, the terminal 810 transmits a handover acknowledge message to the target base station 830. At step S831, the target base station 830 transmits a handover complete message to the source base station 820.

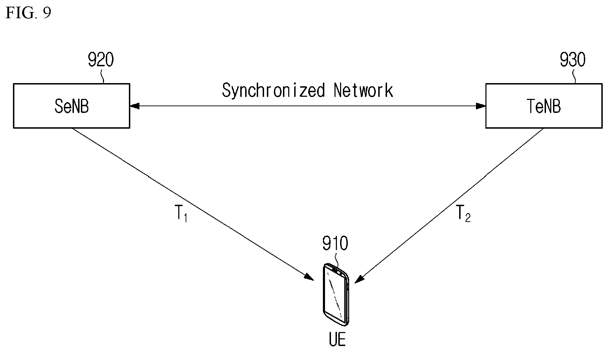

FIG. 9 illustrates an operation of obtaining timing information for a target cell 930 in a communication system according to an embodiment of the present disclosure. FIG. 9 exemplifies an operation of obtaining TA information of the target cell 930 without a RACH procedure. One of the main purposes of a RACH procedure during a handover is to obtain a TA of the target cell 930. When there is no RACH procedure, if a source cell 920 and the target cell 930 are synchronized in real time, a terminal 910 may obtain the TA of the target cell 930 without an explicit TA command. As illustrated in FIG. 9, the terminal 910 first obtains a downlink propagation delay difference between the source cell 920 and the target cell 930. An uplink propagation delay may be deemed to be the same as a downlink propagation delay, and the terminal 910 may determine the TA of the target cell 930 as TA_{target}=TA_{source}-2(T₁-T₂).

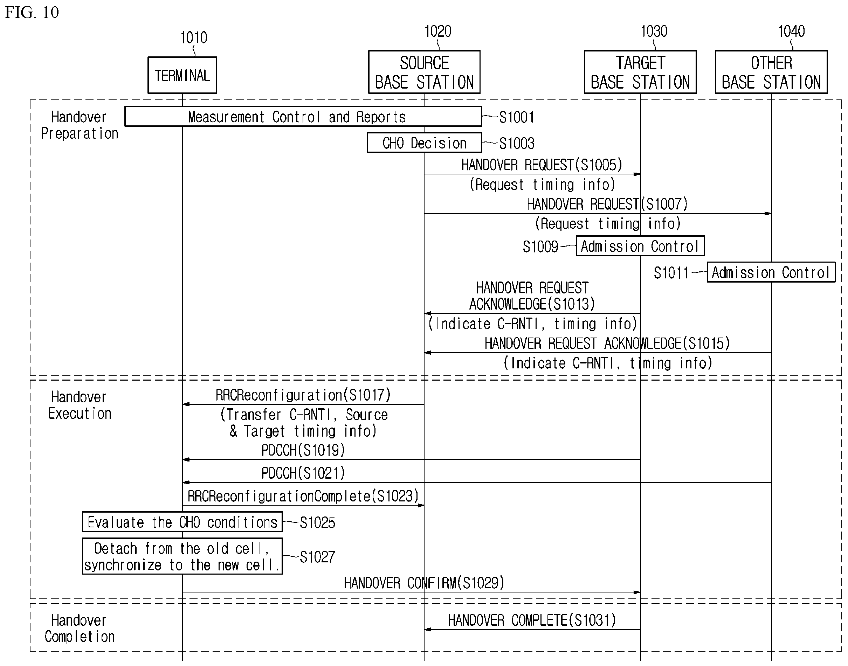

FIG. 10 illustrates yet another example of a handover procedure in a communication system according to an embodiment of the present disclosure.

Referring to FIG. 10, at step S1001, a terminal 1010 measures and reports signal strengths of a source base station 1020, a target base station 1030, and the other base station 1040. When measurement values satisfy a given condition, a measurement event is detected, and the terminal 1010 reports the measurement values to the source base station 1020 accordingly. For example, the measurement event may be defined as the signal strength of a neighbor cell being greater than that of a serving cell. Herein, a signal strength may be determined by the sum of a measurement value and at least one offset. In addition, a hysteresis value may further be applied. At one offset may include at least one of an offset for a measurement object and an offset for a cell.

Herein, the offset for a measurement object (e.g., Ofn) is a measurement object specific offset for a reference signal of a neighbor cell, and the offset for a cell (e.g., Ocn) is a cell specific offset of a neighbor cell and may be set to zero if not configured for the neighbor cell. Herein, according to an embodiment of the present disclosure, a neighbor cell may include a satellite cell. Thus, an offset for a measurement object or an offset for a cell may be differently set or defined according to a terrestrial base station or a satellite base station.

In addition, at least one timer may be used for measurement reporting. For example, a time to trigger (TTT) may be used as a condition for a time length that satisfies an event condition. In addition, timer T321 or timer T322 is started upon receiving configuration information for measurement (e.g., meaConfig) and expires when a measurement result configured by the configuration information is obtained. When timer T321 or timer T322 expires, the terminal 610 may initiate a measurement reporting procedure and suspend relevant measurement. A value of at least one of the above-described TTT and timers may be provided to the terminal 810 through configuration information for measurement (e.g., ReportConfig). Herein, a TTT value and/or a timer value may be differently set or defined according to whether a measured neighbor cell is a terrestrial cell or a satellite cell.

At step S1003, the source base station 1020 determines whether or not to execute the conditional handover. That is, based on a measurement report, the source base station 1020 determines that the terminal 1010 perform a conditional handover.

At step S1005 and step S1007, the source base station 1020 transmits a handover request to the target base station 1030 and the other base station 1040. Herein, information on the terminal 1010 may be transmitted together. The information on the terminal 1010 may include at least one of a capability of the terminal 1010, a measurement report of the terminal 1010, and QoS. When requesting the handover, the source base station 1020 requests timing information together.

At step S1009 and step S1011, the target base station 730 and the other base station 740 perform admission control. Based on the received information on the terminal 1010, the target base station 1030 and the other base station 1040 determine whether or not to admit the handover. Whether or not to admit the handover may be determined based on at least one of a frequency band, a transmission power, QoS, a network capacity, and load balance. In other words, based on an available resource and the number of terminals that are being connected, the target base station 1030 and the other base station 1040 determine whether the terminal 1010 is admissible.

At step S1013 and step S1015, the target base station 1030 and the other base station 1040 transmit a handover request acknowledge signal to the source base station 1020. The handover request acknowledge message may include at least one of whether the handover is admitted, a C-RNTI, and timing information. The timing information may be used for synchronization between the terminal 1010 and a base station. The timing information may include not only a timing difference but also, if the base station is a satellite, at least one of a speed of the satellite, an orbit of the satellite, an altitude of the satellite, and a measured duration. Accordingly, even when the base station is moving, the timing difference may be precisely calculated.

At step S1017, the source base station 1020 transmits a RRC reconfiguration message to the terminal 1010. That is, the source base station 1020 indicates the handover to the terminal 1010. The RRC reconfiguration message may include information on candidate cells for the conditional handover and information on an execution condition for the conditional handover. For example, for the execution condition, information on a measurement object and information on a threshold of measurement value may be included. In addition, according to various embodiments, the RRC reconfiguration message may include at least one of new cell information, a new C-RNTI to be used by the terminal 1010 in the target base station 1030, and timing information.

At step S1019 and step S1021, the target base station 1030 and the other base station 1040 transmit an uplink grant to the terminal 1010 through a physical downlink control channel (PDCCH). The uplink link grant shows available time for data transmission. For example, PDCCH DCI format 0_0 or format 0_1 may be used. For example, a PDCCH transmission procedure of the target base station 1030 (e.g., Msg in RACH) is implemented, and thus the uplink grant may be transmitted. That is, as the terminal 1010 continuously monitors a downlink of the target base station 730 through MBB, the target base station 1030 may transmit the uplink grant directly to the terminal 1010.

At step S1023, the terminal 1010 transmits a RRC reconfiguration complete message to the source base station 1020. The terminal 1010 notifies that the terminal 1010 successfully receives the RRC reconfiguration message and configures a connection with the target base station 1030 based on information provided by the message.

At step S1025, the terminal 1010 evaluates a condition for the conditional handover. The terminal 1010 may monitor channels with a plurality of candidate base stations including the target base station 1030 and determine, based on a measurement result, whether the execution condition of the conditional handover is satisfied. For example, the execution condition may be defined as a signal strength for a neighbor cell being greater than a threshold, a sum of the signal strength for the neighbor cell and an offset being greater than a threshold, or the signal strength for the neighbor cell being greater than a signal strength for a serving cell. That is, according to whether or not a measurement value exceeds a threshold, the terminal 1010 may determine whether or not the execution condition is satisfied. Herein, in the present embodiment, whether or not the condition is satisfied for the target base station 1030 is determined.

At step S1027, the terminal 1010 is synchronized with the target base station 1030 and is disconnected from the source base station 1020. At step S1029, the terminal 1010 that succeeds in the handover transmits a handover acknowledge message to the target base station 1030. At step S1031, the target base station 1030 transmits a handover complete message to the source base station 1020. When the handover is completed, the terminal 1010 is disconnected from the source base station 1020, and the source base station 1020 releases resources allocated to the terminal 1010.

According to the embodiment of FIG. 10, when performing synchronization, the terminal 1010 may not use any separate RA procedure. Accordingly, a time required for a handover process may be reduced, allowing the duration of communication interruption during handover to be reduced.

MBB handover is a handover in which the terminal 1010 receives both channels of the source base station 1020 and the target base station 1030 simultaneously until the completion of the handover and is disconnected from one of the channels after the completion of the handover. To utilize the procedure of FIG. 10, a condition of MBB handover may also be considered. When it is assumed that MBB handover is applied, the terminal 1010 continuously monitors a downlink of the target base station, allowing the target base station to allocate an uplink grant directly to the terminal 1010.

A method for receiving a timing value may be described as follows. Concerning whether admission is possible, when the source base station 1020 transmits a handover request to a candidate base station (e.g., the target base station 1030) and the other base station 1040, the candidate base station notifies its own timing value through corresponding ACK. A serving cell, which receives the handover (HO) request ACK, transmits a corresponding value to the terminal 1010 through a RRC reconfiguration message.

There may be a situation in which the target base station 1030 and the terminal 1010 are not directly connected to each other. However, because the target base station 1030 and the terminal 1010 do not directly communicate with each other and the serving base station notifies timing information through the RRC reconfiguration message, it is not necessary that connection is established between the terminal 1010 and the target base station. The terminal 1010 may calculate a timing difference based on received information.

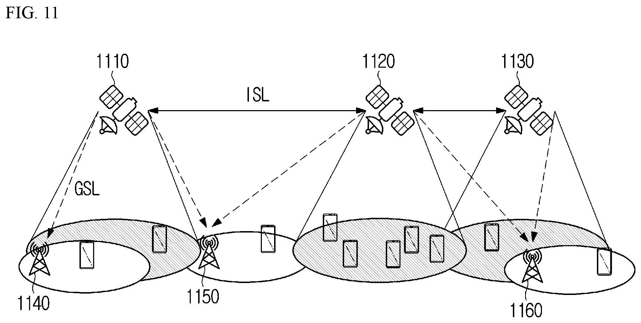

FIG. 11 illustrates an example of a situation in which a terrestrial base station and a satellite base station provide services in a communication system according to an embodiment of the present disclosure.

Referring to FIG. 11, a first satellite base station 1110, a second satellite base station 1120, a third satellite base station 1130, a first terrestrial base station 1140, a second terrestrial base station 1150, and a third terrestrial base station 1160 have their own coverage. The satellite base stations 1110 to 1130 may communicate by using an inter satellite link (ISL) technology. As the ISL technology includes no terrestrial base station, the ISL technology provides a data transmission path that is more stable and has high security. When the ISL technology is applied, each of the satellite base stations 1110 to 1130 may process high-capacity data rapidly. The ISL technology may be applied not only to the low earth orbit (LEO) and the geostationary orbit (GEO) but also to various types of satellites. For example, an inter-satellite link may be designed based on one of various forms of signals such as a laser signal and a RF signal.

The satellite base stations 1110 to 1130 and the terrestrial base stations 1140 to 1160 may communicate through a ground-satellite link (GSL) technology. A technology of connecting a terrestrial base station and a satellite base station is a technology for communication between the satellite base stations 1110 to 1130 and the terrestrial base stations 1140 to 1160 and may be used to transmit data collected by a satellite base station to a terrestrial base station or to control or monitor a satellite base station by a terrestrial base station. Through the ISL technology and the GSL technology, a terminal may select a terrestrial base station or a satellite base station as a target base station for which a handover procedure is to be performed.

The satellite base stations 1110 to 1130 are operated at a higher altitude than the terrestrial base stations 1140 to 1160. Accordingly, compared to the terrestrial base stations 1140 to 1160, the satellite base stations 1110 to 1130 may provide wider coverage. However, since the satellite base stations 1110 to 1130 are located farther from terminals on the ground than the terrestrial base stations 1140 to 1160, signals transmitted from the satellite base stations 1110 to 1130 may experience relatively greater path loss. According to various embodiments, these differences between the satellite base stations 1110 to 1130 and the terrestrial base stations 1140 to 1160 may be considered in a handover procedure.

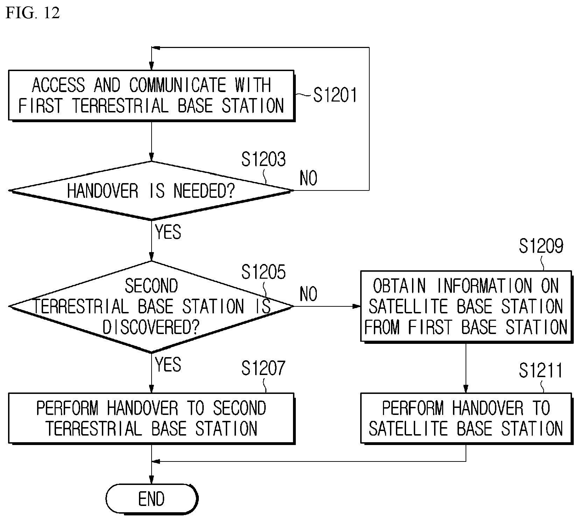

FIG. 12 illustrates an example of a handover procedure considering a satellite base station in a device applicable to the present disclosure. FIG. 12 exemplifies a method for operating a terminal that performs handover.

Referring to FIG. 12, at step S1201, the terminal accesses and communicates with a first terrestrial base station. The terminal executes a random access procedure to access the first terrestrial base station. In the random access procedure, the terminal transmits a random access preamble to a terrestrial base station, and the terrestrial base station transmits a random access response to the terminal.

At step S1203, the terminal determines whether handover is needed or not. The terminal may measure strengths of signals received from the first terrestrial base station and neighbor base stations and determine, based on measured signal strengths, whether or not it is necessary to perform handover. When it is determined that handover is needed, a target base station may be selected together.

At step S1205, the terminal checks whether or not a second terrestrial base station is discovered. That is, the terminal checks whether or not another neighbor terrestrial base station is selected as a target base station. If the another terrestrial base station is discovered, at step S1207, the terminal performs handover to the second terrestrial base station that is discovered.

On the other hand, if the another terrestrial base station is not discovered, at step S1209, the terminal obtains information on a satellite base station from the first base station. Herein, if the terminal already has information on the satellite base station, step S1209 may be skipped. The information on the satellite base station may include a cell ID provided by the satellite base station, orbit information, resource state information, and altitude information.

At step S1211, the terminal performs handover to the satellite base station. Specifically, the terminal may select the satellite base station as the target base station, perform synchronization with the satellite base station, and request a connection configuration.

In the embodiment that is described with reference to FIG. 12, a terrestrial base station has a higher priority than a satellite base station in selecting a target base station for handover. However, according to another embodiment, a satellite base station may have a higher priority. In this case, the terminal may not search for a terrestrial base station first but search for the satellite base station first. According to still another embodiment, the terminal may treat the terrestrial base station and the satellite base station with a same priority.

In addition, in the embodiment that is described with reference to FIG. 12, the terminal accesses a first terrestrial base station. However, according to another embodiment, even when the terminal accesses a first satellite base station, step S1203 to step S1211 of FIG. 12 may be performed.

According to the above-described various embodiments, a terminal may perform measurement for a satellite base station. According to an embodiment, when a terminal measures a signal of a satellite base station, information on an elevation angle of the satellite base station may be used. An elevation angle may be obtained in various manners. For example, an elevation angle may be calculated based on a nadir point of a satellite, an orbit of the satellite, and an altitude of the satellite. In this case, a source base station may forward necessary information to the terminal by including information on the orbit of the satellite and the altitude of the satellite in a measurement configuration message. As another example, when a satellite base station travels along a predetermined orbit, an elevation angle of the satellite base station may be calculated based on a location of the terminal and a reception time of a reference signal.

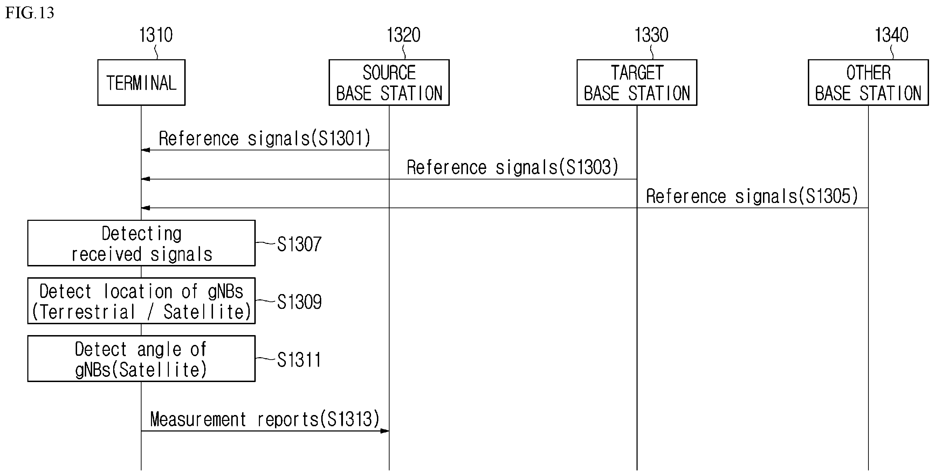

FIG. 13 illustrates an example of a procedure in which a terminal performs measurement for base stations in a communication system according to an embodiment of the present disclosure. FIG. 13 exemplifies a procedure in which a terminal receives reference signals of base stations and obtains information on a corresponding base station.

Referring to FIG. 13, at step S1301 to step S1305, base stations 1320 to 1340 transmit reference signals to a terminal 1310. A reference signal may be transmitted either periodically or aperiodically. Although not shown in FIG. 13, prior to these steps, the source base station 1320 may transmit configuration information for measurement to the terminal 1310.

At step S1307, the terminal 1310 detects the reference signals. The terminal 1310 may obtain information on a channel with each of the base stations 1320 to 1340 based on the reference signals transmitted from the base stations 1320 to 1340. That is, based on configuration information for measurement, a terminal may receive reference signals of the source base station 1320 and neighbor base stations (e.g., the target base station 1330 and the other base station 1340) and perform measurement.

At step S1309, the terminal 1310 detects locations of the base stations 1320 to 1340. In other words, the terminal 1310 may detect the locations of the base stations 1320 to 1340 based on a measurement result based on the reference signals. For example, distances to the base stations 1320 to 1340 may be detected based on received signal strengths of the reference signals, and directions to the base stations 1320 to 1340 may be detected based on receive beams used when receiving the reference signals.

At step S1311, the terminal 1310 detects an elevation angle of a satellite base station among the base stations 1320 to 1340. Whether each of the base stations 1320 to 1340 is a satellite base station or a terrestrial base station may be checked based on the configuration information for measurement that is provided by the source base station 1320. For example, the configuration information for measurement includes a list of neighbor base stations, and the list of neighbor base stations may include at least one of information on a type of each neighbor base station (e.g., terrestrial base station, satellite base station), an identifier of each neighbor base station (e.g., physCellId), and a dedicated offset for a cell (e.g., cellIndividualOffset). Herein, the list of neighbor base stations may be included in configuration information that includes a measurement item (e.g., measObject). That is, configuration information for a measurement item (e.g., MeasObject IE) may include a list of neighbor base stations (e.g., cellsToRemoveList, cellsToAddModList) and a threshold value related to measurement (e.g., thresholdRSRP. thresholdRSRQ, thresholdSINR, thresholdRSRP, thresholdRSRQ, thresholdSINR).

Herein, a cell identifier may indicate explicitly or implicitly that a corresponding base station is a satellite base station. Alternatively, a measure item (e.g., measObject), which provides a list of neighbor base stations for a satellite base station, may be provided as separate configuration information. Furthermore, according to an embodiment, configuration information specific to a satellite base station may include epoch information, synchronization-related information, information on a moving trajectory of a satellite, information on a cell feature (e.g., a fixed cell, a moving cell), cell-centered location information (e.g., a reference location), and information necessary to determine an elevation angle (e.g., a maximum elevation angle, a minimum elevation angle).

According to an embodiment, the terminal 1310 may determine an elevation angle of a satellite base station based on a nadir point of the satellite base station, an orbit of the satellite base station, and an altitude of the satellite base station. As the terminal 1310 is capable of obtaining, through configuration information, information necessary to calculate an elevation angle, for example, orbit information and altitude information of a satellite base station, the terminal 1310 may calculate an elevation angle of the satellite base station.

At step S1313, the terminal 1310 transmits a measurement report to the source base station 1320. The measurement report includes a measurement result for each of the base stations 1320 to 1340. For example, the measurement report may include a received signal strength for each of the base stations 1320 to 1340. Herein, the measurement report may be used as a request for handover. Accordingly, the measurement report may be transmitted when a predetermined condition is satisfied. For example, whether or not to transmit the measurement report may be determined based on a measured elevation angle of a satellite base station. According to an embodiment, when the measured elevation angle of the satellite base station exceeds a threshold value, the terminal 1310 may transmit the measurement report.

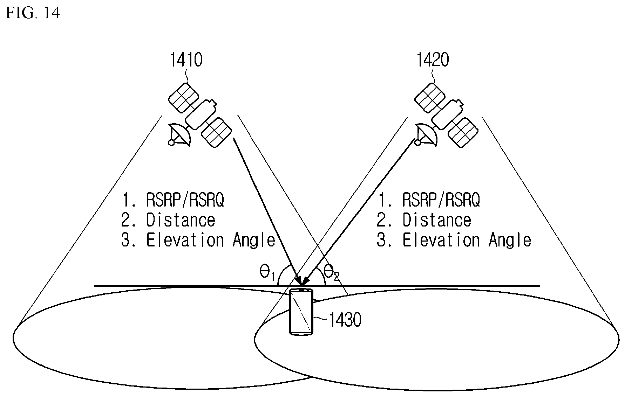

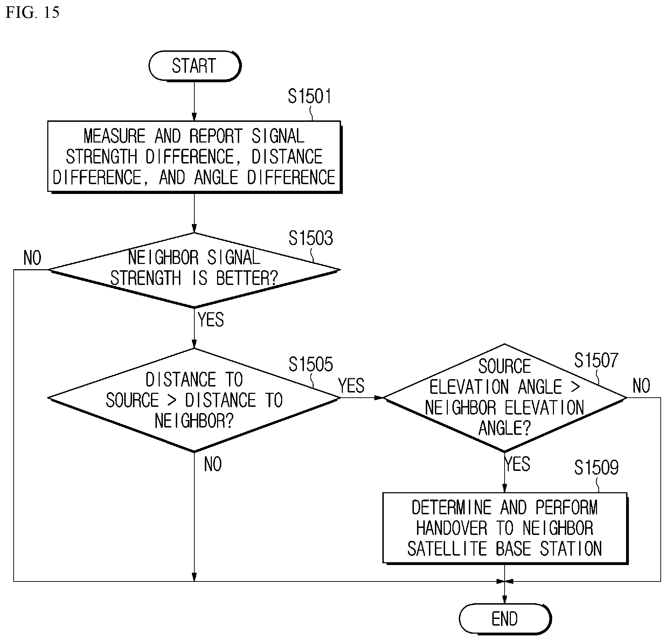

FIG. 14 illustrates parameter values of a satellite measurable by a device according to an embodiment of the present disclosure. Referring to FIG. 14, a terminal 1430 may measure RSRP and RSRQ that are indicators showing strengths of signals of a first satellite base station 1410 and a second satellite base station 1420. In addition, for additional parameters, the terminal 1430 may measure distance values between the terminal 1430 and the satellite base stations 1410 and 1420 and elevation angles of the satellite base stations 1410 and 1420 (e.g., θ₁ and θ₂). Various parameters as those measured in FIG. 14 may be used to determine whether or not to perform handover. A handover procedure based on various parameters may be performed as shown in FIG. 15 below.

FIG. 15 illustrates an example of a procedure for determining whether to perform a handover based on various parameters according to an embodiment of the present disclosure. FIG. 15 exemplifies a method for operating a terminal when a handover is performed between satellite base stations.

Referring to FIG. 15, at step S1501, a terminal measures signal strengths for a source satellite base station and a neighbor satellite base station, a distance difference between the two base stations, and an elevation angle of each of the base stations and reports a measurement result to the source satellite base station. To this end, the terminal may use reference signals that are transmitted from the source base station and the neighbor satellite base station.

At step S1503, the terminal checks whether or not the signal strength of the neighbor satellite base station is better than that of the source satellite base station. By comparing the signal strengths of the base stations that are measured at step S1501, the terminal may determine whether or not the signal strength of the neighbor satellite base station is better than that of the source satellite base station.

When the signal strength of the neighbor satellite base station is better than that of the source satellite base station, the terminal at step S1505 checks whether or not a distance to the source satellite base station is greater than a distance to the neighbor satellite base station. By comparing the distances to the base stations that are measured at step S1501, the terminal may determine whether or not the distance to the source satellite base station is greater than the distance to the neighbor satellite base station.

When the distance to the source satellite base station is greater than the distance to the neighbor satellite base station, the terminal at step S1507 determines whether or not an elevation angle of the source satellite base station is greater than an elevation angle of the neighbor satellite base station. By comparing the elevation angles of the base stations that are measured at step S1501, the terminal may determine whether or not the elevation angle of the source satellite base station is greater than the elevation angle of the neighbor satellite base station.

When the elevation angle of the source satellite base station is greater than the elevation angle of the neighbor satellite base station, the terminal at step S1509 determines that the handover to the neighbor satellite base station is to be performed, and then performs the handover. That is, when a signal strength of a neighbor satellite base station is greater, the neighbor satellite base station is closer than a source satellite base station, and an elevation angle of the neighbor satellite base station is smaller than that of the source satellite base station, a terminal performs a handover to the neighbor satellite base station. Herein, in comparison of signal strengths, when a difference between measured values is equal to or greater than a threshold value, any one of the signal strengths may be determined to be greater than the other signal strength. **In** addition, in comparison of distances, when a difference between measured values is equal to or greater than a threshold value, any one of the distances may be determined to be greater than the other distance. **In** addition, in comparison of elevation angles, when a difference between measured values is equal to or greater than a threshold value, any one of the elevation angles may be determined to be greater than the other elevation angle.

**In** the embodiment that is described with reference to FIG. 15, whether or not to perform a handover procedure is determined based on all of the following: signal strength, distance to a satellite base station, and elevation angle of a satellite base station. However, it is not necessary for a source satellite base station to use all of the above-described three indicators to determine whether or not to perform a handover. That is, according to other embodiments, a terminal may determine whether or not to perform a handover based on at least one of a signal strength, a distance to a satellite base station, and an elevation of the satellite base station.

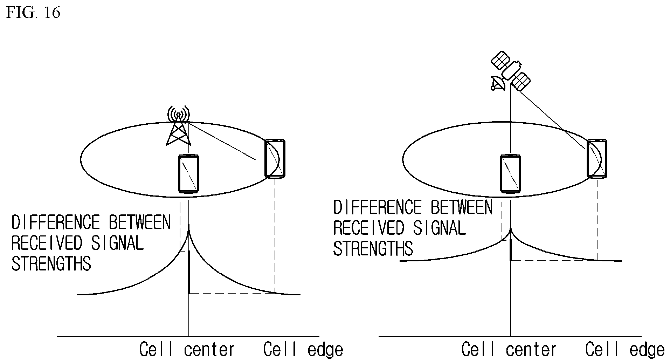

FIG. 16 illustrates an example of changes in the signal strength of a terrestrial base station and a satellite base station according to the location of a terminal. Referring to FIG. 16, when a terminal moves a same distance, the change in received signal strength is greater when using a terrestrial base station than when using a satellite base station. A distance between a satellite base station and a terminal is much greater than that between a terrestrial base station and the terminal. Accordingly, this is because, if the terminal moves a same distance, the rate of change in the distance between the satellite base station and the terminal before and after the movement is smaller than the rate of change in the distance between the terrestrial base station and the terminal before and after the movement. **In** addition, this is because the change in the angle of the direction from the satellite base station to the terminal due to movement is smaller than the change in the angle of the direction from the terrestrial base station to the terminal due to movement.

Accordingly, as described with reference to FIG. 15, a handover may be performed based on an elevation angle and a distance as well as a single strength. According to an embodiment, in a next generation communication system including terrestrial base stations and satellite base stations, when a handover is performed between a terrestrial base station and at least one satellite base station or between a satellite base station and another satellite base station, information on a target base station may be perceived before the handover such that the terminal may perform the handover more rapidly.

In addition, coverage of a satellite base station may be larger than that of a terrestrial base station. Accordingly, the terminal may selectively perform the handover by considering a characteristic of a service that is being used. For example, for a service requiring relatively high stability, the terminal may perform the handover to a satellite base station that provides relatively wider coverage. On the other hand, for a service requiring relatively low latency or relatively high data reliability, the terminal may perform the handover to a satellite base station that provides relatively narrower coverage. Thus, according to a characteristic of a target base station that is selected for each service, a handover may be performed to a cell that supports different service coverage. This enables a terminal to acquire timing information of a target base station before determining execution of a handover between multiple base stations and thus to effectively perform the handover without delay caused by a random access procedure. In addition, a terminal may select an optimal base station at its location by considering information on neighbor satellite base stations.

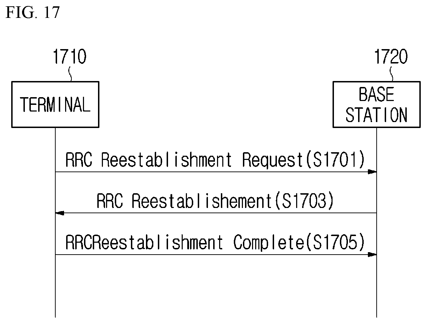

FIG. 17 illustrates an example of a radio resource control reestablishment (RRE, RRC reestablishment) procedure according to an embodiment of the present disclosure.

Referring to FIG. 17, at step S1701, a terminal 1710 transmits a RRC reestablishment request message to a base station 1720 that is being connected thereto. That is, the terminal 1710 initiates a RRC procedure in response to detecting radio link failure (RLF). When synchronization between the terminal 1710 and the base station 1720 is lost in a physical layer or the terminal 1710 is incapable of receiving a signal of the base station 1720, the terminal 1710 may determine RLF.

At step S1703, the base station 1720 transmits a RRC reestablishment message to the terminal. As the previous serving cell of the terminal 1710, the base station 1720 is already aware of information on the terminal 1710 (e.g., UE context information) through a random access procedure or a previously received handover request message, and may therefore rapidly reestablish the RRC.

At step S1705, the terminal 1710 transmits a RRC reestablishment procedure complete message to the target base station 1720. Accordingly, the connection between the terminal 1710 and the base station 1720 may be restored.

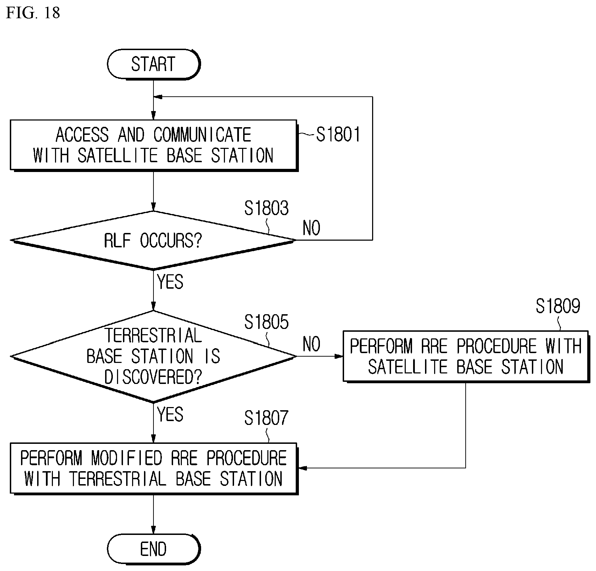

The RRE procedure described with reference to FIG. 17 may have the following problems when applied to a satellite base station. When a terminal performs a RRC procedure with a satellite base station, the procedure may not be smoothly performed due to a significant propagation delay, leading to an extended duration for a handover procedure. In addition, when a satellite uses a moving beam, a cell may move a long distance during RLF. Accordingly, even when a terminal successfully performs the RRC procedure, the terminal may experience RLF. Thus, the present disclosure proposes a modified RRC reestablishment procedure as that shown in FIG. 18.

FIG. 18 illustrates an example of a modified RRE procedure according to an embodiment of the present disclosure. FIG. 18 exemplifies a method for operating a terminal.

Referring to FIG. 18, at step S1801, the terminal accesses and communicates with a satellite base station. The terminal may access the satellite base station through an initial access or handover and perform communication.

At step S1803, the terminal determines whether RLF occurs or not. When deteriorated channel quality causes loss of synchronization with the base station, failure to receive the signal of the base station, or decoding errors exceeding a predetermined threshold, the terminal may determine RLF. If RLF does not occur, the terminal returns to step S1801 and continues communication with the satellite base station.

On the other hand, if RLF occurs, at step S1805, the terminal searches for a terrestrial base station. That is, instead of performing RRE with the satellite base station, which is the previous serving cell, in response to the RLF, the terminal preferentially searches for a terrestrial base station as a candidate for the new serving cell.

If a terrestrial base station is discovered, the terminal performs the modified RRE procedure with the terrestrial base station at step S 1807. Specifically, the terminal transmits a RRC reestablishment request message to the terrestrial base station and receives a RRC reestablishment message from the terrestrial base station. For the RRE procedure to be performed with the terrestrial base station, the terrestrial base station is required to have information on the terminal. To this end, according to an embodiment, a satellite base station may share the information on the terminal with neighbor terrestrial base stations.

On the other hand, if no terrestrial base station is detected, the terminal performs the RRE procedure with the satellite base station, which is the previous serving cell, at step S1809. As the satellite base station has the information on the terminal, the RRE procedure may be performed. Specifically, the terminal transmits a RRC reestablishment request message to the satellite base station and receives a RRC reestablishment message from the satellite base station.

According to the above-described various embodiments, a conditional handover may be performed without RACH for a target cell. A conditional handover without RACH according to various embodiments may be performed in various scenarios. For example, when a target cell is a satellite base station, the above-described conditional handover without RACH may be performed. As an example, when there are multiple target cells that include at least one satellite base station and at least one terrestrial base station, the conditional handover without RACH may be applied only to the satellite base station, and a conditional handover with RACH may be performed for the terrestrial base station. In this case, the above-described timing-related information and uplink grant information may be provided only for the target cell that is a satellite base station.

Meanwhile, those of ordinary skill in the technical field to which the present embodiment pertains will be able to understand that various modifications and alterations may be made without departing from the above-described essential features. Therefore, the disclosed methods should be considered in a descriptive rather than a limiting sense. The scope of the present disclosure is defined by the appended claims rather than the foregoing description, and all variations within the equivalent scope thereof shall be construed as being included in the present disclosure.

## Claims

1. A method for operating a terminal in a communication system, the method comprising:
transmitting a measurement report to a first base station;
receiving, from the first base station, a radio resource control (RRC) reconfiguration message including, as information on candidate base stations for a handover, at least one of information on a radio network temporary identifier (RNTI) of a second base station, information on a timing difference between the first base station and the second base station, and information on an uplink resource allocated by the second base station; and
performing the handover to the second base station by using information included in the RRC reconfiguration message.

2. The method of claim 1, further comprising determining the second base station as a target base station based on an execution condition for the handover indicated by the RRC reconfiguration message.

3. The method of claim 2, wherein the execution condition is defined based on at least one of a received signal strength for a base station, a distance between a terminal and the base station, and an elevation angle of the base station.

4. The method of claim 1, further comprising:
transmitting a handover indication message to the first base station and the second base station;
receiving an uplink grant from the second base station; and
transmitting a handover complete message to the second base station.

5. The method of claim 4, wherein the handover indication message is broadcast to the first base station and the second base station.

6. The method of claim 1, wherein at least one of the candidate base stations includes a satellite base station.

7. The method of claim 6, wherein among the candidate base stations a terrestrial base station has a higher priority as a target base station compared to the satellite base station.

8. The method of claim 7, further comprising receiving, from the first base station, a measurement configuration message including at least one of altitude information and orbital information of the second base station, the second base station being the satellite base station.

9. The method of claim 1,
wherein the measurement report is transmitted when a condition related to an elevation angle of the first base station and an elevation angle of the second base station is satisfied.

10. A method for operating a first base station in a communication system, the method comprising:
Receiving a measurement report from a terminal;
determining execution of a handover of the terminal;
transmitting a handover request message to at least one or more neighbor base stations;
receiving a handover request acknowledge message from the at least one or more neighbor base stations; and
transmitting, to the terminal, a radio resource control (RRC) reconfiguration message including, as information on candidate base stations for the handover, at least one of information on a radio network temporary identifier (RNTI) of a second base station, information on a timing difference between the first base station and the second base station, and information on an uplink resource allocated by the second base station.

11. The method of claim 10, further comprising:
receiving a handover indication message from the terminal; and
receiving a handover complete message from the second base station among at least one or more neighbor base stations.

12. The method of claim 10, wherein the handover request acknowledge message includes the information on the RNTI, the information on the timing difference, and the information on the uplink resource.

13. The method of claim 10, wherein at least one of the at least one or more neighbor base stations includes a satellite base station.

14. The method of claim 10, further comprising transmitting, to the terminal, a measurement configuration message including at least one of altitude information and orbital information of
the second base station, the second base station being the satellite base station.
